# EUROPEAN PATENT APPLICATION

(11) **EP 1 219 345 A2**
(43) Date of publication of application: **03.07.2002**
(21) Application number: 01204718.9
(22) Date of filing: 11.12.2001
(51) Int. Cl.: B01F 7/00, B01F 13/04

(54) **Mixer for a basin made from sheet product**

(30) Priority: 13.12.2000 NL 1016862
(71) Applicant: Jan Steenbergen bv, 7957 ZG De Wijk (NL)
(72) Inventor: Steenbergen, Jan, 7957 ZG De Wijk (NL)

(57) **Abstract**

The invention relates to a mixer for a foil basin, surrounded by a bank (2), provided with an undercloth (4) and a floating cloth (6) and filled with a slurry (5). The mixer comprises a shaft (14) which sticks from the bank between the undercloth (4) and the floating cloth (6) and which is provided with a fan (13), mounted to an end of the shaft (14). The shaft (14) may be coupled to a power take-off of a tractor. In order to prevent the floating cloth (6) from being pulled into the fan (13), a cage (23,24) covers the top of the mixer.

## Description

The invention relates to a mixer for a foil basin, surrounded by a bank, provided with an undercloth and a floating cloth, between which for example slurry can be temporarily stored. A foil basin is for example used for the temporary storage of manure during the winter period, when it cannot be spread. At the end of the winter the manure is pumped out of the basin via a discharge pipe for further processing. The problem here is that solid components tend to settle at the bottom and that it is very difficult to loosen up the manure afterwards. For that reason, a foil basin is normally provided with a second pipe, and the manure is periodically circulated via the discharge pipe and the second pipe. For that purpose, a pump is mounted temporarily, which is for example driven by the power take-off of a tractor. This way of circulating is time consuming, it uses much fuel and moreover it turns out that in practice a complete mixing cannot be guaranteed.

The inventive mixer obviates these disadvantages to a large extent and is characterized in that the mixer comprises a shaft which operationally stretches from the bank between the undercloth and the floating cloth, that the shaft is provided on a first end with a fan and on a second end with connecting means for connecting to a power source and that at least near the fan at least the top side of the shaft is surrounded by a cage which prevents the floating cloth from being drawn towards the fan. This way of mixing turns out to be about ten times faster and moreover to give a better final result.

A favourable embodiment which makes the inventive mixer suitable for foil basins with different depths is characterized in that the shaft is mounted on a supporting beam and that the supporting beam is hingedly connected to a mounting plate which is operationally fixed onto the bank.

A favourable embodiment according to another aspect of the invention, which may further increase the effectiveness, is characterized in that the apparatus is provided with a first nozzle, positioned round the fan. With the nozzle, a powerful spout can be produced which easily loosens the settled material. Preferably, the nozzle is mounted to the supporting beam for example with the aid of a bracket or a support.

A favourable embodiment according to a further aspect of the invention is characterized in that the apparatus is provided with a second nozzle that is hingedly connected to the first nozzle. By operationally hinging the second nozzle back and forth, one can aim the spout into different directions, such that in all these directions the settled material can be loosened. It is especially advantageous then to let the second nozzle operationally hinge in a horizontal plane.

A further embodiment which is easily put into practise is characterized in that the apparatus is provided with two cables, operationally stretching along the supporting beam, the first ends of which are connected to the second nozzle and the second ends of which are connected to a control device.

Between the first nozzle and the second nozzle, material is drawn in due to the venturi effect. This entails the risk that also the floating cloth is drawn downward. A favourable embodiment that prevents this from happening is
characterized in that the first nozzle and the second nozzle are at least partly surrounded by a cage.

The invention also relates to a method for mixing slurry, stored in a foil basin. The inventive method is characterized in that a shaft, at least partly surrounded by a cage and provided with a fan, is guided between an undercloth and a floating cloth of the foil basin and is rotated.

A favourable realisation of the inventive method is characterized in that round the fan at least one adjustable nozzle is placed; a spouting direction of which is periodically changed.

The invention will now be further explained with a reference to the following figures, in which:
- Fig. 1: schematically represents in cross section a foil basin provided with a known mixing arrangement;
- Fig. 2: schematically represents in cross section a foil basin provided with the inventive mixer;
- Fig. 3: represents more in detail the fan and the nozzles.

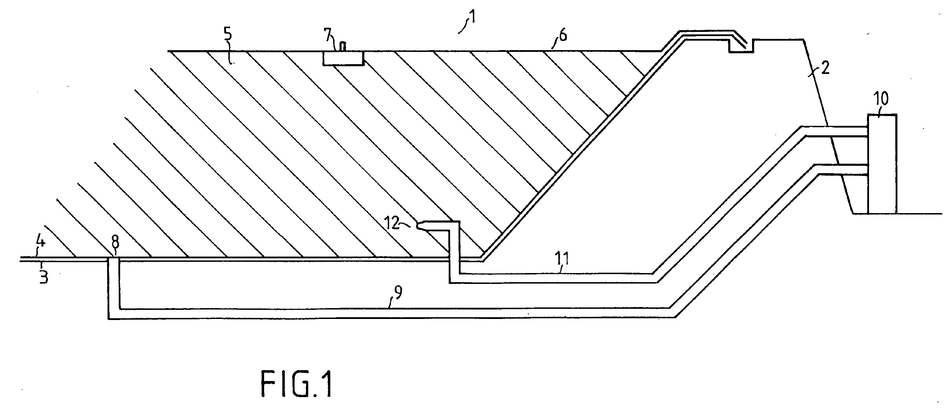

Fig. 1 schematically represents in cross section a foil basin 1 provided with a known mixing arrangement. Foil basin 1 consists of a basin bounded by a bank 2 and with a bottom 3 which is covered by an undercloth 4 made for example of a synthetic material. In foil basin 1, slurry like manure 5 is temporarily stored. In order to reduce the emission of gases, like ammonia, the manure 5 is covered by a floating cloth 6, the edges of which are together with the edges of the undercloth dug in on top of bank 2, in such a manner that the manure is completely sealed in.

Ventilation takes place via one or more floats 7. Moreover, foil basin 1 is provided with a discharge pipe 8, which can be connected via a first pipe 9 to a pump 10, with which the manure can be pumped for example into a manure injector.

During the storage of the manure, components with different densities will float or will sink to the bottom and they will form a cake, which may cause great difficulties when the basin must be pumped out. For that reason a second pipe 11 is provided. Periodically, pump 10 is connected between first pipe 9 and second pipe 11 and manure 5 is circulated, in the process of which the manure leaves one or more nozzles 12 and forms powerful spouts, which bring about a mixing of the different components of the manure. As a rule of thumb, one should circulate the contents of the foil basin 1 about twice for obtaining a good mixing effect. With a volume of typically 2500 m³ and a pump capacity of typically 200 m³/hour, this means that periodically must be pumped during 25 hours.

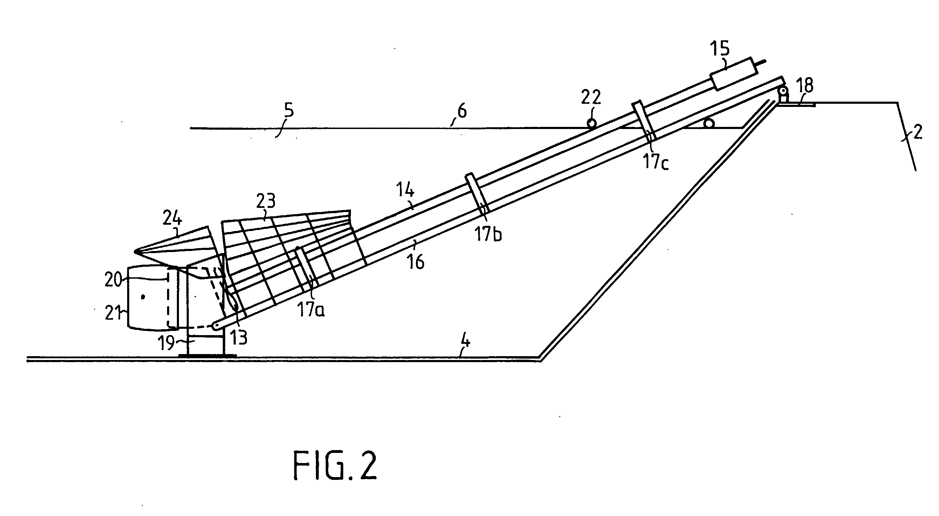

Fig. 2 schematically represents in cross section a foil basin 1 provided with the inventive mixer, which mixer substantially consists of a fan 13, which is driven via a shaft 14 and a coupling piece 15, which is known as such and which can be coupled to a tractor (not shown), of which the power take-off can be coupled with coupling piece 15 in a way well known in the art. Shaft 14 is supported by a frame 16 , consisting of two mutually coupled profiles, and is supported by supports 17a,17b,17c. On the top side, frame 16 is hingedly connected to a mounting plate 18 that is anchored into bank 2. On the underside, frame 16 is hingedly connected to a support 19, which rests on a concrete plate that in turn rests on undercloth 4. In support 19, a first nozzle 20 with a circular cross section is fixedly mounted and fan 13 operationally rotates just before or just inside first nozzle 20 and produces a powerful spout of manure which is pushed through first nozzle 20. Behind first nozzle 20, a second nozzle 21 is mounted, rotatable round a vertical shaft, with which the powerful spout of manure can be bent off into a previously determined direction. In this way, for example 3000 m³ of manure can be circulated, which means that the homogenising of manure in foil basin 1 will take only a few hours.

At the location where shaft 14 and frame 16 pass floating cloth 6, floating cloth 6 is necessarily provided with an opening which may for example be surrounded by a sealing ring 22 which is air-filled, such that sealing ring 22 will always float and no manure may flow over the cloth.

Because of the sucking action of fan 13 on the side opposite to the nozzles, floating cloth 6 may be pulled downwards. In order to prevent floating cloth 6 from contacting fan 13, a cage is placed above fan 13, consisting of a first cage part 23 which is connected to frame 16 and a second frame part 24 which is connected to support 19. In this way an adequate screening off is obtained, while the apparatus can still be used for foil basins with various depths.

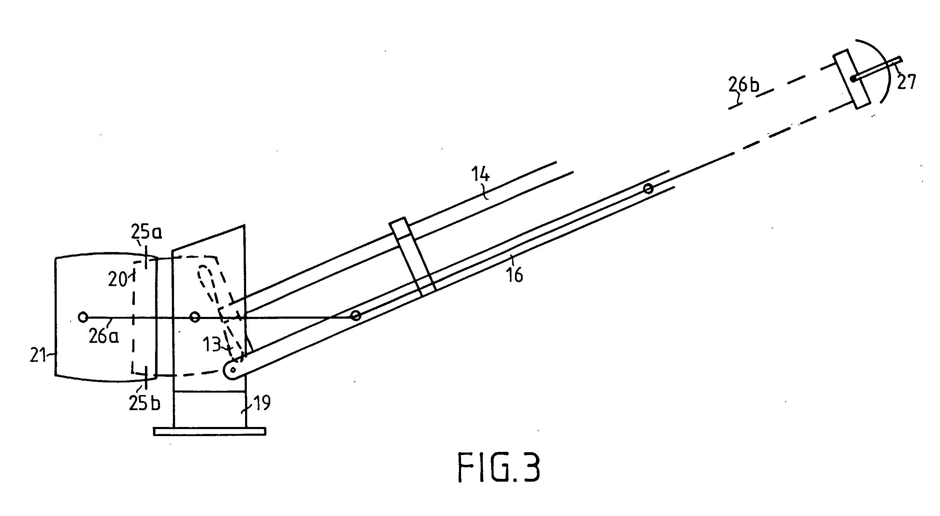

Fig. 3 represents more in detail the construction of the fan 13 and the nozzles 20,21. Fan 13 operationally rotates just inside nozzle 20 and pumps a powerful spout of manure into the direction of nozzle 21. Nozzle 21 may rotate round two schematically indicated axes 25a,25b, due to which the spout of manure can be directed into different directions along the bottom, which will give a good mixing result. The control takes place via a steel cable 26a, which is connected to a side of second nozzle 21 and runs along frame 16 to a place on top of the bank, where it is connected to a control handle 27. From control handle 27, a second steel cable 26b runs back to an opposite side of second nozzle 21. The spout can now be directed by rotating control handle 27 and to arrest it in a way well known in the art.

It should be noted that it is not necessary to put sealing means between nozzle 20 and second nozzle 21. It is even so, that a relatively wide opening between these two nozzles will bring about an additional pumping action due to the well-known venturi effect.

## Claims

1. Mixer for a foil basin, surrounded by a bank, provided with an undercloth and a floating cloth, between which for example slurry can be temporarily stored, **characterized in that** the mixer comprises a shaft which operationally stretches from the bank between the undercloth and the floating cloth, that the shaft is provided on a first end with a fan and on a second end with connecting means for connecting to a power source and that at least near the fan at least the top side of the shaft is surrounded by a cage.

2. Mixer according to claim 1, **characterized in that** the shaft is mounted on a supporting beam and that the supporting beam is hingedly connected to a mounting plate which is operationally fixed onto the bank.

3. Mixer according to claim 2, **characterized in that** the apparatus is provided with a first nozzle, positioned round the fan.

4. Mixer according to claim 3, **characterized in that** the first nozzle is mounted to the supporting beam.

5. Mixer according to claim 3 or 4, **characterized in that** the apparatus is provided with a second nozzle which is hingedly connected to the first nozzle.

6. Mixer according to claim 5, **characterized in that** the second nozzle operationally may hinge in a horizontal plane.

7. Mixer according to claim 5 of 6, **characterized in that** the apparatus is provided with two cables, operationally stretching along the supporting beam, the first ends of which are connected to the second nozzle and the second ends of which are connected to a control device.

8. Mixer according to claim 5, **characterized in that** the first nozzle and the second nozzle are at least partly surrounded by a cage.

9. Method for mixing a slurry, stored in a foil basin, **characterized in that** a shaft, at least partly surrounded by a cage and provided with a fan, is guided between an undercloth and a floating cloth of the foil basin and is rotated.

10. Method according to claim 9, **characterized in that** round the fan at least one adjustable nozzle is placed, a spouting direction of which is periodically changed.
